# EUROPEAN PATENT APPLICATION

(11) **EP 4 825 550 A1**
(43) Date of publication of application: **21.10.2026**
(21) Application number: 25305536.2
(22) Date of filing: 14.04.2025
(51) Int. Cl.: B27K 3/50, A01N 1/00, C08L 91/00, C10G 1/00, C10G 3/00, C10G 45/58, C10G 65/04, C10L 1/04

(54) **BIO-SOURCED FLUID AS WOOD PRESERVATIVE**

(71) Applicant: TotalEnergies OneTech, 92400 Courbevoie (FR)
(72) Inventor: SWOBODA, Benjamin, 69360 SOLAIZE (FR); PERUMALSAMY, Jayachandran, 400710 NAVI MUMBAI (IN); KHANRA, Sipra, 400710 NAVI MUMBAI (IN); SAWANT, Sayali, 400606 NAVI MUMBAI - MAHARASHTRA (IN)
(74) Representative: Lavoix

(57) **Abstract**

The present invention relates to the use of a bio-sourced fluid as a wood preservative, particularly for the protection of wood against xylophagous species such as wood-boring insects and lignovorous fungi, said fluid having a kinematic viscosity at 40°C from 3 to 6 mm²/s, a flash point of higher than 120°C and a pour point lower than -40°C, having a boiling point in the range of 200°C to 400°C and a boiling range below 80°C, said fluid comprising more than 95% isoparaffins and less than 3% of naphtens by weight, a biocarbon content of at least 95% by weight, containing less than 100 ppm aromatics by weight.

## Description

The present invention concerns the use of a bio-sourced fluid having a high flash point as wood preservative, particularly against xylophagous species. The present invention also concerns a process using said fluid for wood preservation against xylophagous species.

Wood is a complex biomass material, the properties of which are typically defined by their proportions of cellulose, hemicellulose lignin, and extractive compounds. Wood possesses great advantages, such as high strength-to-weight ratio, high impact resistance processability, and regulation of air temperature and humidity. However, due to the hygroexpansion of wood composites, wood is highly susceptible to climate conditions and is dimensionally unstable. Owing to the absorption of moisture, wood is prone to undergo attacks from xylophagous species.

The restriction of hygroscopicity in wood can be achieved through many modification methods, including steam use under natural environment treatment, methyltrimethoxysilane modification, styrene modification, siloxanes modification, high density polyethylene modification, flame retardant and thermal treatments. However, thermal treatments may attenuate the wood mechanical properties and chemical modifications might be environmentally detrimental. In addition, the available modification methods are often complex and energy consuming.

In this context, oil preservation is effective to improve wood dimensional stability and durability. The oil enters the pores on the wood surface and blocks the xylophagous species. Generally, the oils used for this application are fossil-based oils provided they have a high flash point (>100°C). Unfortunately, although these oils are effective, they are not environmentally friendly due to their fossil origin and potential impact on ecosystems. There is therefore a need to find new, more environmentally friendly alternatives for wood preservation.

In recent years, bio-sourced alternatives have been developed to replace the use of fossil-based oils in wood preservation, such as plant-based oils like linseed oil and date seed oil. These alternatives appear to offer performance comparable to fossil-based solutions, but they do not completely eliminate moisture and therefore cannot fully prevent attacks by xylophagous species. As a result, there is still a need in the development of more effective and environmentally friendly wood preservation solutions that can address these limitations.

The present invention concerns the use of a bio-sourced fluid as a wood preservative, particularly for the protection of wood against xylophagous species such as wood-boring insects and lignovorous fungi, said fluid having a kinematic viscosity at 40°C from 3 to 6 mm²/s, a flash point of higher than 120°C and a pour point lower than -40°C, having a boiling point in the range of 200°C to 400°C and a boiling range below 80°C, said fluid comprising more than 95% isoparaffins and less than 3% of naphtens by weight, a biocarbon content of at least 95% by weight, containing less than 100 ppm aromatics by weight.

Particularly, the inventors have unexpectedly discovered that the use of a fluid as described above not only reduces the moisture content but also effectively prevents attacks by xylophagous species, thus offering a much more effective and suitable bio-sourced alternative than those already described in the prior art. The use of the bio-sourced fluid according to the invention not only improves the wood's durability but also acts as a protective barrier, preventing the proliferation of xylophagous species and prolonging the lifespan of the material.

### Summary of the invention

The present invention concerns the use of a bio-sourced fluid as a wood preservative, particularly for the protection of wood against xylophagous species such as wood-boring insects and lignovorous fungi, said fluid having a kinematic viscosity at 40°C from 3 to 6 mm²/s, a flash point of higher than 120°C and a pour point lower than -40°C, having a boiling point in the range of 200°C to 400°C and a boiling range below 80°C, said fluid comprising more than 95% isoparaffins and less than 3% of naphtens by weight, a biocarbon content of at least 95% by weight, containing less than 100 ppm aromatics by weight.

Preferably, the present invention concerns the use of the fluid as described above as a wood preservative against xylophagous species, preferably selected from the group consisting of termites, beetles, and fungi.

Preferably, the bio-sourced fluid has a pour point lower than -50°C.

Advantageously, the bio-sourced fluid has an initial boiling point of at least 260°C and a final boiling point of about less than about 320°C, preferably less than about 310°C.

Preferably, the bio-sourced fluid according to the invention contains less than 50 ppm aromatics by weight, and preferably less than 20 ppm by weight.

According to an embodiment, the bio-sourced fluid according to the invention contains less than 5 ppm, advantageously less than 3 ppm and preferably less than 0.5 ppm of sulfur.

Preferably, the bio-sourced fluid contains less than 1% by weight of naphtens, more preferably less than 500 ppm and more preferably less than 50 ppm.

According to an embodiment, the bio-sourced fluid contains less than 120 ppm by weight of water, preferably less than 115 ppm, and more preferably less than 110 ppm.

Preferably,the bio-sourced fluid has a biodegradability at 28 days of at least 60%, preferably at least 70%, more preferably at least 75% and advantageously at least 80%, as measured according to the OECD 306 standard.

The present invention also concerns a method for treating wood, said method comprising a step of contacting wood with a bio-sourced fluid as defined above.

Preferably, the step of contacting is a step of immersing wood in the bio-sourced fluid.

Preferably, in the method according to the invention, the bio-sourced fluid is heated to a temperature ranging from 140°C to 200°C, preferably from 140°C to 160°C.

### Description

The present invention relates to the use of a bio-sourced fluid as a wood preservative, particularly for the protection of wood against xylophagous species such as wood-boring insects and lignovorous fungi, said fluid having a kinematic viscosity at 40°C from 3 to 6 mm²/s, a flash point of higher than 120°C and a pour point lower than -40°C, having a boiling point in the range of 200°C to 400°C and a boiling range below 80°C, said fluid comprising more than 95% isoparaffins and less than 3% of naphtens by weight, a biocarbon content of at least 95% by weight, containing less than 100 ppm aromatics by weight.

By "wood preservative", it is meant a chemical substance or treatment applied to wood to protect it from deterioration caused by various factors such as moisture, fungi, insects, and other environmental conditions. These preservatives help extend the lifespan of wood by preventing decay, rot, and insect infestation, making the wood more durable and suitable for use in various outdoor or high-humidity applications.

The terms "preservation", "treatment" and "conditioning" are used interchangeably to describe the action of protecting the wood.

The hydrocarbon fluid as mentioned above may thus be used as a wood preservative, a wood conditioner or an agent for treating wood.

By "xylophagous species" it is meant organisms, typically insects or fungi, that feed on wood. These species are capable of breaking down the cellulose and lignin in wood, leading to its decay and structural weakening. Common examples of xylophagous species include termites, wood-boring beetles, woodlice or carpenter ants, and certain types of fungi such as for example *Serpula lacrymans* or mold type fungi such as *Cladosporium,* or *Aspergillus.*

Preferably, the bio-sourced fluid according to the invention is used as a wood preservative against xylophagous species.

Advantageously, the xylophagous species are selected from the group consisting of: termites, beetles, and fungi.

The common factor between xylophagous species is the high moisture content of wood, which enables these organisms to thrive. Xylophagous species, such as termites, wood-boring insects, and certain fungi, require moisture to survive and reproduce, making moist wood particularly vulnerable to their attacks. Similarly, mold grows in high-humidity conditions and easily settles on water-saturated wood. In both cases, wood with high water content becomes more susceptible to damage and degradation.

Also, the use of the fluid according to the invention for treatment further helps to reduce the moisture content of the wood after treatment, thereby preventing the proliferation of the xylophagous species.

Preferably, the bio-sourced fluid according to invention is used for controlling moisture in wood to prevent both xylophagous infestations and mold formation.

The bio-sourced fluid according to the invention can be used to a wide range of wood types, including but not limited to oak, teak, mahogany, cedar, pine, redwood, Douglas fir, ipe, ash, maple, birch, spruce, cherry, walnut, and poplar. These wood species, commonly used in construction or any outdoor uses, can be effectively treated to reduce moisture content, making them less susceptible to xylophagous species.

According to the invention, the bio-sourced fluid refers to a fluid derived from biological sources, especially from renewable organic matter, including plant-based materials. These oils are obtained through processes such as extraction, pressing, or chemical treatment of seeds, fruits or other botanical components. Examples of bio-sourced oils include oils extracted from seeds (e.g. date seed oil, sunflower oil, soybean oil), fruits (e.g. palm oil, coconut oil), and other parts of plants.

As well understood by the skilled person, a boiling range below 80°C means that the difference between the final boiling point and the initial boiling point is less than 80°C.

According to an embodiment, the pour point of the bio-sourced fluid is lower than -50°C.

The bio-sourced fluid as defined above and having a boiling point in the range of from 200 to 400°C and comprising more than 95% isoparaffins and containing less than 100 ppm aromatics by weight, is obtainable by a process comprising the step of catalytically hydrogenating a feed comprising more than 95% by weight of a hydrodeoxygenated isomerized hydrocarbon biomass feedstock or a feed comprising more than 95% by weight of a feedstock originating from syngas, at a temperature from 80 to 180°C, at a pressure from 50 to 160 bars, a liquid hourly space velocity of 0.2 to 5 hr¹ and an hydrogen treat rate up to 200 Nm³/ton of feed.

According to a first variant, the feed comprises more than 98%, preferably more than 99% of a hydrodeoxygenated isomerized hydrocarbon biomass feedstock, and more preferably consists of a hydrodeoxygenated isomerized hydrocarbon biomass feedstock. According to an embodiment, the biomass is a vegetable oil, an ester thereof or a triglyceride thereof. According to an embodiment, the feed is a NEXBTL feed.

According to second variant, the feed comprises more than 98%, preferably more than 99% of a feedstock originating from syngas. According to an embodiment, the feedstock originates from renewable syngas.

According to an embodiment, the hydrogenation conditions of the process are the following:
- Pressure: 80 to 150 bars, and preferably 90 to 120 bars;
- Temperature: 120 to 160°C and preferably 150 to 160°C;
- Liquid hourly space velocity (LHSV) : 0.4 to 3, and preferably 0.5 to 0.8 hr⁻¹;
- Hydrogen treat rate be up to 200 Nm³/ton of feed.

According to an embodiment, a fractionating step is carried out before the hydrogenating step, or after the hydrogenating step or both; according to an embodiment, the process comprises three hydrogenation stages, preferably in three separate reactors.

The bio-sourced fluid as mentioned above is thus a fluid having a boiling point in the range of from 200 to 400°C and a boiling range below 80°C, said fluid comprising more than 95% isoparaffins and less than 3% of naphthens by weight, a biodegradability at 28 days of at least 60%, as measured according to the OECD 306 standard, a biocarbon content of at least 95% by weight, containing less than 100 ppm aromatics by weight, and preferably comprising carbon expressed as CH₃ sat less than 30%.

According to an embodiment, the fluid has a boiling point in the range 150°C to 400°C, preferably from 200°C to 400°C, especially 220°C to 340°C and advantageously more than 240°C and up to 340°C.

The boiling point can be measured according to well-known methods for the skilled person. As an example, the boiling point can be measured according to ASTM D86 standard.

According to an embodiment, the fluid has a boiling range below 80 °C, preferably below 60°C, more preferably between 35 and 50°C, advantageously between 40 and 50°C.

According to an embodiment, the fluid contains less than 50 ppm aromatics, and preferably less than 20 ppm by weight.

According to an embodiment, the fluid contains less than 3% by weight of naphthens by weight, preferably less than 1% and advantageously less than 500 ppm and even less than 50 ppm.

According to an embodiment, the fluid contains less than 120 ppm by weight of water, preferably less than 115 ppm, and more preferably less than 110 ppm.

According to an embodiment, the fluid contains less than 5 ppm, even less than 3 ppm and preferably less than 0.5 ppm sulphur.

According to an embodiment, the fluid comprises more than 98% isoparaffins by weight.

According to an embodiment, the fluid has a ratio of iso-paraffins to n-paraffins of at least 20:1.

According to an embodiment, the fluid comprises more than 95% by weight, of molecules with from 14 to 18 carbon atoms as isoparaffins, preferably comprises by weight, from 60 to 95%, more preferably 80 to 98%, of isoparaffins selected from the group consisting of C15 isoparaffins, C16 isoparaffins, C17 isoparaffins, C18 isoparaffins and mixtures of two or more thereof.

According to an embodiment, the fluid comprises:
- C15 isoparaffins and C16 isoparaffins in a combined amount of 80 to 98%; or
- C16 isoparaffins, C17 isoparaffins and C18 isoparaffins in a combined amount of 80 to 98%; or
- C17 isoparaffins and C18 isoparaffins in a combined amount of 80 to 98%.

According to an embodiment, the fluid exhibits one or more, preferably all of the following features:
- the fluid comprises carbon expressed as Cquat less than 3%, preferably less than 1% and more preferably about 0%;
- the fluid comprises carbon expressed as CH sat less than 20%, preferably less than 18% and more preferably less than 15%;
- the fluid comprises carbon expressed as CH₂ sat more than 40%, preferably more than 50% and more preferably more than 60%;
- the fluid comprises carbon expressed as CH₃ sat less than 30%, preferably less than 28% and more preferably less than 25%;
- the fluid comprises carbon expressed as CH₃ long chain less than 20%, preferably less than 18% and more preferably less than 15%;
- the fluid comprises carbon expressed as CH₃ short chain less than 15%, preferably less than 10% and more preferably less than 9%.

The amount of isoparaffins, naphthens and/or aromatics can be determined according to any known methods for the skilled person. Among those methods, mention may be made of gas chromatography.

According to an embodiment, the fluid has a biodegradability at 28 days of at least 60%, preferably at least 70%, more preferably at least 75% and advantageously at least 80%, as measured according to the OECD 306 standard.

According to an embodiment, the fluid has a biocarbon content of at least 95% by weight, preferably at least 97%, more preferably at least 98%, and even more preferably about 100%.

The feedstock as mentioned above or simply feed may, according a first variant, be a feed which is the result of a process of hydrodeoxygenation followed by isomerization, hereafter "HDO/ISO", as practiced on a biomass.

This HDO/ISO process is applied on biological raw materials, the biomass, selected from the group consisting of vegetable oils, animal fats, fish oils, and mixtures thereof, preferably vegetable oils. Suitable vegetable raw materials include rapeseed oil, canola oil, colza oil, tall oil, sunflower oil, soybean oil, hemp oil, olive oil, linseed oil, mustard oil, palm oil, arachis oil, castor oil, coconut oil, animal fats such as suet, tallow, blubber, recycled alimentary fats, starting materials produced by genetic engineering, and biological starting materials produced by microbes such as algae and bacteria. Condensation products, esters, or other derivatives obtained from biological raw materials may also be used as starting materials. An especially preferred vegetable raw material is an ester or triglyceride derivative. This material is submitted to an hydrodeoxygenation (HDO) step for decomposing the structure of the biological ester or triglyceride constituent, and for removing oxygen, phosphorus and sulfur (part of) compounds, concurrently hydrogenating the olefinic bonds, followed by isomerization of the product thus obtained, thus branching the hydrocarbon chain and improving the low temperature properties of the thus-obtained feedstock.

In the HDO step, hydrogen gas and the biological constituent are passed to the HDO catalyst bed either in countercurrent or concurrent manner. In the HDO step, the pressure and the temperature range typically between 20 and 150 bar, and between 200 and 500°C, respectively. In the HDO step, known hydrodeoxygenation catalysts may be used. Prior to the HDO step, the biological raw material may optionally be subjected to prehydrogenation under milder conditions to avoid side reactions of the double bonds. After the HDO step, the product is passed to the isomerization step where hydrogen gas and the biological constituent to be hydrogenated, and optionally a n-paraffin mixture, are passed to the isomerization catalyst bed either in concurrent or countercurrent manner. In the isomerization step, the pressure and the temperature range between typically 20 and 150 bar, and between 200 and 500°C, respectively. In the isomerization step, isomerization catalysts known as such may be typically used.

Secondary process steps can also be present (such as intermediate pooling, scavenging traps, and the like).

The product issued from the HDO/ISO steps may for instance be fractionated to give the desired fractions.

Various HDO/ISO processes are disclosed in the literature. WO2014/033762 discloses a process which comprises a pre-hydrogenation step, a hydrodeoxygenation step (HDO) and an isomerization step which operates using the countercurrent flow principle. EP1728844 describes a process for the production of hydrocarbon components from mixtures of a vegetable or animal origin. The process comprises a pretreatment step of the mixture of a vegetable origin for removing contaminants, such as, for example, alkaline metal salts, followed by a hydrodeoxygenation (HDO) step and an isomerization step. EP2084245 describes a process for the production of a hydrocarbon mixture that can be used as diesel fuel or diesel component by the hydrodeoxygenation of a mixture of a biological origin containing fatty acid esters possibly with aliquots of free fatty acids, such as for example vegetable oils such as sunflower oil, rape oil, canola oil, palm oil, or fatty oils contained in the pulp of pine trees (tall oil), followed by hydroisomerization on specific catalysts. EP2368967 discloses such a process and the thus-obtained product.

Company Nesté Oy has developed specific HDO/ISO processes, and is currently marketing products thus obtained, under the tradename NexBTL^{®} (diesel, aviation fuel, naphtha, isoalkane). This NexBTL^{®} is an appropriate feed for use in the present invention. The NEXBTL feed is further described at http://en.wikipedia.org/wiki/NEXBTL and/or at the neste oy website.

The feedstock or simply feed may, according a second variant, be a feed which is the result of a process of conversion of syngas into hydrocarbons suitable for further processing as a feedstock. Syngas typically comprises hydrogen and carbon monoxide and possibly minor other components, like carbon dioxide. A preferred syngas used in the invention is renewable syngas, i.e. syngas from renewable sources (incl. renewable energy sources as detailed below).

Representative of possible syngas-based feedstocks are the Gas to liquids (GTL) feedstock, the Biomass to liquids (BTL) feedstock, the renewable Methanol to liquid (MTL) feedstock, renewable steam reforming, and waste-to-energy gasification, as well as more recent methods using renewable energy (solar energy, wind energy) to convert carbon dioxide and hydrogen into syngas. An example of this later process is the audi^{®} e-diesel feedstock process. The term syngas also extends to any source of material that can be used in a Fischer Tropsch process, such as methane-rich gases (which may use syngas as intermediate).

The syngas to liquids (STL) process is a refinery process that converts gaseous hydrocarbons into longer-chain hydrocarbons such as gasoline or diesel fuel. Renewable methane-rich gases are converted into liquid synthetic fuels either via direct conversion or via syngas as an intermediate, for example using the Fischer Tropsch process, Methanol to Gasoline process (MTG) or Syngas to gasoline plus process (STG+). For the Fischer Tropsch process, the effluents produced are Fischer-Tropsch derived.

By "Fischer-Tropsch derived" is meant that a hydrocarbon composition is, or derives from, a synthesis product of a Fischer-Tropsch condensation process. The Fischer-Tropsch reaction converts carbon monoxide and hydrogen (syngas) into longer chain, usually paraffinic hydrocarbons. The overall reaction equation is straightforward (but hide mechanistic complexity): $n \left(CO+2{H}_{2}\right) = \left(-{CH}_{2}-\right) n + {nH}_{2} O + heat ,$

in the presence of an appropriate catalyst and typically at elevated temperatures (e.g., 125 to 300°C, preferably 175 to 250°C) and/or pressures (e.g., 5 to 100 bars, preferably 12 to 50 bars). Hydrogen: carbon monoxide ratios other than 2:1 may be employed if desired. The carbon monoxide and hydrogen may themselves be derived from organic or inorganic, natural or synthetic sources, typically either from natural gas or from organically derived methane. For example, it can also be derived from biomass or from coal.

The collected hydrocarbon composition containing a continuous iso-paraffinic series as described above may preferably be obtained by hydroisomerisation of a paraffinic wax, preferably followed by dewaxing, such as solvent or catalytic dewaxing. The paraffinic wax is preferably a Fischer-Tropsch derived wax.

Hydrocarbon cuts may be obtained directly from the Fischer-Tropsch reaction, or indirectly for instance by fractionation of Fischer-Tropsch synthesis products or preferably from hydrotreated Fischer-Tropsch synthesis products.

Hydrotreatment preferably involves hydrocracking to adjust the boiling range (see, e.g., GB-B-2077289 and EP-A-0147873) and/or hydroisomerisation, which can improve cold flow properties by increasing the proportion of branched paraffins. EP-A-0583836 describes a two-step hydrotreatment process in which a Fischer-Tropsch synthesis product is firstly subjected to hydroconversion under conditions such that it undergoes substantially no isomerisation or hydrocracking (this hydrogenates the olefinic and oxygen-containing components), and then at least part of the resultant product is hydroconverted under conditions such that hydrocracking and isomerisation occur to yield a substantially paraffinic hydrocarbon fuel. It is possible to adjust the isomerization process so as to obtain mainly isoparaffins with the required carbon distribution. The syngas-based feedstock is isoparaffinic in nature as it contains more than 90% isoparaffins.

Other post-synthesis treatments, such as polymerisation, alkylation, distillation, cracking-decarboxylation, isomerisation and hydroreforming, may be employed to modify the properties of Fischer-Tropsch condensation products, as described for instance in US-A-4125566 and US-A-4478955. Examples of Fischer-Tropsch processes which for example can be used to prepare the above-described Fischer-Tropsch derived collected hydrocarbon composition are the so-called commercial Slurry Phase Distillate technology of Sasol, the Shell Middle Distillate Synthesis Process and the "AGC-21" Exxon Mobil process. These and other processes are for example described in more details in EP-A-776959, EP-A-668342, US-A-4943672, US-A-5059299, WO-A-9934917 and WO-A-9920720.

The desired fraction(s) may subsequently be isolated for instance by distillation.

Feedstocks typically contain less than 15 ppm of sulphur, preferably less than 8 ppm and more preferably less than 5 ppm, especially less than 1 ppm, as measured according to EN ISO 20846. Typically the feedstocks will comprise no sulphur as being biosourced products.

Before entering the hydrogenation unit, a pre-fractionation step can take place. Having a more narrow boiling range entering the unit allows having a more narrow boiling range at the outlet. Indeed typical boiling ranges of pre-fractionated cuts are 220 to 330°C while cuts without a pre-fractionating step typically have a boiling range from 150°C to 360°C.

The feedstock issued from HDO/ISO or from syngas is then hydrogenated. The feedstock can optionally be pre-fractionated.

Hydrogen that is used in the hydrogenation unit is typically a high purity hydrogen, e.g. with a purity of more than 99%, albeit other grades can be used.

Hydrogenation takes place in one or more reactors. The reactor can comprise one or more catalytic beds. Catalytic beds are usually fixed beds.

Hydrogenation takes place using a catalyst. Typical hydrogenation catalysts include but are not limited to: nickel, platinum, palladium, rhenium, rhodium, nickel tungstate, nickel molybdenum, molybdenum, cobalt molybdenate, nickel molybdenate on silica and/or alumina carriers or zeolites. A preferred catalyst is Ni-based and is supported on an alumina carrier, having a specific surface area varying between 100 and 200 m²/g of catalyst.

The hydrogenation conditions are typically the following:
- Pressure: 50 to 160 bars, preferably 80 to 150 bars, and most preferably 90 to 120 bars or 100 to 150 bars;
- Temperature: 80 to 180°C, preferably 120 to 160°C and most preferably 150 to 160°C;
- Liquid hourly space velocity (LHSV) : 0.2 to 5 hr⁻¹, preferably 0.4 to 3, and most preferably 0.5 to 0.8;
- Hydrogen treat rate: adapted to the above conditions, which can be up to 200 Nm³/ton of feed.

The temperature in the reactors can be typically about 150-160°C and the pressure can be typically about 100 bars while the liquid hourly space velocity can be typically about 0.6h⁻¹ and the treat rate is adapted, depending on the feed quality and the first process parameters.

The hydrogenation process of the invention can be carried out in several stages. There can be two or three stages, preferably three stages, preferably in three separate reactors. The first stage will operate the sulphur trapping, hydrogenation of substantially all unsaturated compounds, and up to about 90% of hydrogenation of aromatics. The flow exiting from the first reactor contains substantially no sulphur. In the second stage the hydrogenation of the aromatics continues, and up to 99% of aromatics are hydrogenated. The third stage is a finishing stage, allowing an aromatic content as low as 100 ppm by weight or even less such as below 50 ppm, more preferably less than 20 ppm, even for high boiling products.

The catalysts can be present in varying or substantially equal amounts in each reactor, e.g. for three reactors according to weight amounts of 0.05-0.5/0.10-0.70/0.25-0.85, preferably 0.07-0.25/0.15-0.35/0.4-0.78 and most preferably 0.10-0.20/0.20-0.32/0.48-0.70.

It is also possible to have one or two hydrogenation reactors instead of three.

It is also possible that the first reactor be made of twin reactors operated alternatively in a swing mode. This may be useful for catalyst charging and discharging: since the first reactor comprises the catalyst that is poisoned first (substantially all the sulphur is trapped in and/or on the catalyst) it should be changed often.

One reactor can be used, in which two, three or more catalytic beds are installed.

It may be necessary to insert quenches on the recycle to cool effluents between the reactors or catalytic beds to control reaction temperatures and consequently hydrothermal equilibrium of the hydrogenation reaction. In a preferred embodiment, there is no such intermediate cooling or quenching.

In case the process makes use of 2 or 3 reactors, the first reactor will act as a sulphur trap. This first reactor will thus trap substantially all the sulphur. The catalyst will thus be saturated very quickly and may be renewed from time to time. When regeneration or rejuvenation is not possible for such saturated catalyst the first reactor is considered as a sacrificial reactor which size and catalyst content both depend on the catalyst renewal frequency.

In an embodiment, the resulting product and/or separated gas is/are at least partly recycled to the inlet of the hydrogenation stages. This dilution helps, if this were to be needed, maintaining the exothermicity of the reaction within controlled limits, especially at the first stage. Recycling also allows heat-exchange before the reaction and also a better control of the temperature.

The stream exiting the hydrogenation unit contains the hydrogenated product and hydrogen. Flash separators are used to separate effluents into gas, mainly remaining hydrogen, and liquids, mainly hydrogenated hydrocarbons. The process can be carried out using three flash separators, one of high pressure, one of medium pressure, and one of low pressure, very close to atmospheric pressure.

The hydrogen gas that is collected on top of the flash separators can be recycled to the inlet of the hydrogenation unit or at different levels in the hydrogenation units between the reactors.

Because the final separated product is at about atmospheric pressure, it is possible to feed directly the fractionation stage, which is preferably carried out under vacuum pressure that is at about between 10 to 50 mbars, preferably about 30 mbars.

The fractionation stage can be operated such that various hydrocarbon fluids can be withdrawn simultaneously from the fractionation column, and the boiling range of which can be predetermined.

Therefore, fractionation can take place before hydrogenation, after hydrogenation, or both.

The hydrogenation reactors, the separators and the fractionation unit can thus be connected directly, without having to use intermediate tanks. By adapting the feed, especially the initial and final boiling points of the feed, it is possible to produce directly, without intermediate storage tanks, the final products with the desired initial and final boiling points. Moreover, this integration of hydrogenation and fractionation allows an optimized thermal integration with reduced number of equipment and energy savings.

The bio-sourced fluids as mentioned above possess outstanding properties, in terms of aniline point or solvency power, molecular weight, vapour pressure, viscosity, defined evaporation conditions for systems where drying is important, and defined surface tension.

The bio-sourced fluids are primarily isoparaffinic and contain more than 95% isoparaffins, preferably more than 98%.

The bio-sourced fluids typically contain less than 3% by weight of naphthens, preferably less than 1% and advantageously less than 500 ppm and even less than 50 ppm by weight.

Typically, the bio-sourced fluids comprise carbon atoms number from 6 to 30, preferably 8 to 24 and most preferably from 9 to 20 carbon atoms. The fluids especially comprise a majority, i.e. more than 90% by weight, of molecules with from 14 to 18 carbon atoms as isoparaffins. Preferred bio-sourced fluids are those comprising by weight, from 60 to 95%, preferably 80 to 98%, of isoparaffins selected from the group consisting of C15 isoparaffins, C16 isoparaffins, C17 isoparaffins, C18 isoparaffins and mixtures of two or more thereof.

Preferred bio-sourced fluids comprise:
- C15 isoparaffins and C16 isoparaffins in a combined amount of 80 to 98%; or
- C16 isoparaffins, C17 isoparaffins and C18 isoparaffins in a combined amount of 80 to 98%; or
- C17 isoparaffins and C18 isoparaffins in a combined amount of 80 to 98%.

Examples of preferred bio-sourced fluids are those comprising:
- from 30 to 70% of C15 isoparaffins and from 30 to 70% C16 isoparaffins, preferably from 40 to 60% of C15 isoparaffins and from 35 to 55% C16 isoparaffins;
- from 5 to 25% of C15 isoparaffins, from 30 to 70% C16 isoparaffins and from 10 to 40% of C17 isoparaffins, preferably from 8 to 15% of C15 isoparaffins, from 40 to 60% C16 isoparaffins and from 15 to 25% of C17 isoparaffins;
- from 5 to 30% of C17 isoparaffins and from 70 to 95% C18 isoparaffins, preferably from 10 to 25% of C17 isoparaffins and from 70 to 90% C18 isoparaffins.

The bio-sourced fluids exhibit a specific branching distribution.

Branching rates of isoparaffins as well as carbon distribution is determined using the NMR method (as well as GC-MS) and determination of each type of carbon (with no hydrogen, with one, two or three hydrogens). C quat sat represents the saturated quaternary carbon, CH sat represents the saturated carbon with one hydrogen, CH₂ sat represents the saturated carbon with two hydrogens, CH₃ sat represents the saturated carbon with three hydrogens, CH₃ long chain and CH₃ short chain represent the CH₃ group on a long chain and a short chain, respectively where the short chain is one methyl group only and a long chain is a chain having at least two carbons. The sum of CH₃ long chain and CH₃ short chain is CH₃ sat.

The bio-sourced fluids typically comprise carbon expressed as Cquat less than 3%, preferably less than 1% and more preferably about 0%.

The bio-sourced fluids typically comprise carbon expressed as CH sat less than 20%, preferably less than 18% and more preferably less than 15%.

The bio-sourced fluids typically comprise carbon expressed as CH₂ sat more than 40%, preferably more than 50% and more preferably more than 60%.

The bio-sourced fluids typically comprise carbon expressed as CH₃ sat less than 30%, preferably less than 28% and more preferably less than 25%.

The bio-sourced fluids typically comprise carbon expressed as CH₃ long chain less than 20%, preferably less than 18% and more preferably less than 15%.

The bio-sourced fluids typically comprise carbon expressed as CH₃ short chain less than 15%, preferably less than 10% and more preferably less than 9%.

The bio-sourced fluids have a boiling range from 200 to 400°C and also exhibit an enhanced safety, due to the very low aromatics content.

The bio-sourced fluids typically contain less than 100 ppm, more preferably less than 50 ppm, advantageously less than 20 ppm aromatics (measured using a UV method). This makes them suitable for use in crop protection fluids. This is especially useful for high temperature boiling products, typically products boiling in the range 300-400°C, preferably 320-380°C.

The boiling range of the bio-sourced fluids is preferably not more than 80 °C, preferably not more than 70°C, more preferably not more than 60°C, more preferably between 35 and 50°C and advantageously between 40 and 50°C.

The bio-sourced fluids also have an extremely low sulphur content, typically less than 5 ppm, even less than 3 ppm and preferably less than 0.5 ppm, at a level too low to be detected by the usual low-sulphur analyzers.

The Initial Boiling Point (IBP) to Final Boiling Point (FBP) range is selected according to the particular use and composition. An Initial Boiling Point of more than 250°C allows classification as free of VOC (Volatile Organic Compounds) according to the directive 2004/42/CE.

Biodegradation of an organic chemical refers to the reduction in complexity of the chemical through metabolic activity of microorganisms. Under aerobic conditions, microorganisms convert organic substances into carbon dioxide, water and biomass. OECD 306 method, is available for assessing biodegradability of individual substances in seawater. OECD Method 306 can be carried out as either a shake flask or Closed Bottle method and the only microorganisms added are those microorganisms in the test seawater to which the test substance is added. In order to assess the biotic degradation in seawater, a biodegradability test was performed which allows the biodegradability to be measured in seawater. The biodegradability was determined in the Closed Bottle test performed according to the OECD 306 Test Guidelines. The biodegradability of the bio-sourced fluids is measured according to the OECD Method 306.

The OECD Method 306 is the following:
The closed bottle method consists on dissolution of a pre-determined amount of the test substance in the test medium in a concentration of usually 2-10 mg/l, with one or more concentrations being optionally used. The solution is kept in a filled closed bottle in the dark in a constant temperature bath or enclosure controlled within a range of 15-20°C. The degradation is followed by oxygen analyses over a 28-day period. Twenty-four bottles are used (8 for test substance, 8 for reference compound and 8 for sweater plus nutriment). All analyses are performed on duplicate bottles. Four determinations of dissolved oxygen, at least, are performed (day 0, 5, 15 and 28) using a chemical or electrochemical method.

Results are thus expressed in % degradability at 28 days. The bio-sourced fluids have a biodegradability at 28 days of at least 60%, as measured according to the OECD 306 standard, preferably at least 70% by weight, more preferably at least 75% and advantageously at least 80%.

The carbon of a biomaterial comes from the photosynthesis of the plants and thus of atmospheric CO₂. The degradation (by degradation, one will understand also combustion/incineration at the end of the lifetime) of these CO₂ materials thus does not contribute to the warming since there is no increase in the carbon emitted in the atmosphere. The assessment CO₂ of the biomaterials is thus definitely better and contributes to reduce the print carbon of the products obtained (only energy for manufacture is to be taken into account). On the contrary, a fossil material of origin being also degraded out of CO₂ will contribute to the increase in the CO₂ rate and thus to climate warming. The bio-sourced fluids according to the invention will thus have a print carbon which will be better than that of compounds obtained starting from a fossil source.

The term of "bio-carbon" indicates that carbon is of natural origin and comes from a biomaterial, as indicated hereafter. The content of biocarbon and the content of biomaterial are expressions indicating the same value.

A renewable material of origin or biomaterial is an organic material in which carbon comes from CO₂ fixed recently (on a human scale) by photosynthesis starting from the atmosphere. On ground, this CO₂ is collected or fixed by the plants. At sea, CO₂ is collected or fixed by microscopic bacteria or plants or algae carrying out a photosynthesis. A biomaterial (carbon natural origin 100%) presents an isotopic ratio ¹⁴C/¹²C higher than 10-¹², typically about 1.2 × 10⁻¹², while a fossil material has a null ratio. Indeed, the isotope ¹⁴C is formed in the atmosphere and is then integrated by photosynthesis, according to a scale of time of a few tens of years at the maximum. The half-life of ¹⁴C is 5730 years. Thus the materials resulting from photosynthesis, namely the plants in a general way, have necessarily a maximum content of isotope ¹⁴C.

The determination of the content of biomaterial or content of biocarbon is given pursuant to standards ASTM D 6866-12, method B (ASTM D 6866-06) and ASTM D 7026 (ASTM D 7026-04). Standard ASTM D 6866 concerns "Determining the Biobased Content of Natural Range Materials Using Radiocarbon and Isotope Ratio Mass Spectrometry Analysis", while standard ASTM D 7026 concerns "Sampling and Reporting of Results for Determination of Biobased Content of Materials via Carbon Isotope Analysis". The second standard mentions the first in its first paragraph.

The first standard describes a test of measurement of the ratio ¹⁴C/¹²C of a sample and compares it with the ratio ¹⁴C/¹²C of a sample renewable reference of origin 100%, to give a relative percentage of C of origin renewable in the sample. The standard is based on the same concepts that the dating with ¹⁴C, but without making application of the equations of dating. The ratio thus calculated is indicated as the "pMC" (percent Modem Carbon). If the material to be analyzed is a mixture of biomaterial and fossil material (without radioactive isotope), then the value of pMC obtained is directly correlated with the quantity of biomaterial present in the sample. The value of reference used for the dating to ¹⁴C is a value dating from the years 1950. This year was selected because of the existence of nuclear tests in the atmosphere which introduced great quantities of isotopes into the atmosphere after this date. The reference 1950 corresponds to a value pMC of 100. Taking into account the thermonuclear tests, the current value to be retained is approximately 107.5 (what corresponds to a factor of correction of 0.93). The signature into radioactive carbon of a current plant is thus of 107.5. A signature of 54 pMC and 99 pMC thus correspond to a quantity of biomaterial in the sample of 50% and 93%, respectively.

The bio-sourced fluid according to the invention comes at least partly from biomaterial and thus presents a content of biomaterial from at least 95%. This content is advantageously even higher, in particular more than 98%, more preferably more than 99% and advantageously about 100%. The bio-sources fluids according to the invention can thus be bio-carbon of 100% biosourced or on the contrary to result from a mixture with a fossil origin. According to an embodiment, the isotopic ratio ¹⁴C/¹²C is between 1.15 and 1.2 x 10⁻¹².

All percentages and ppm are by weight unless indicated to the contrary. Singular and plural are used interchangeably to designate the fluid(s).

The details of the bio-sourced fluids according to the invention are described in the patent application WO 2018/078023.

### Process and method

The present invention also relates to a method for wood treatment, said method comprising a step of contacting the wood with a hydrocarbon fluid as defined above.

According to an embodiment, the step of contacting the wood in the method according to the invention is a step of spraying the wood with the hydrocarbon fluid as described above.

According to an embodiment, the step of contacting the wood in the method according to the invention is a step of coating the wood with the hydrocarbon fluid as described above.

Preferably, the step of contacting the wood in the method according to the invention is a step of coating such as dipping, deluging, spraying or brushing, all being techniques well known from the skilled person.

According to an embodiment, the step of contacting the wood in the method according to the invention is a step of immersing the wood in the hydrocarbon fluid as described above.

According to an embodiment, the method of the invention consists in a step of impregnation, such as high pressure impregnation or double vacuum impregnation into the body of the wood, all being techniques well known from the skilled person.

The hydrocarbon fluid as defined above may be applied on at least one surface of the wood. Preferably, "wood" refers to a piece of wood or a wood panel.

According to an embodiment, the method of the invention is carried out on sawn timber, logs, glulam, plywood, laminated veneer lumber (LVL), wood based composite products such as oriented strand board (OSS), medium density fibreboard (MDF), fibreboard, hardboard or particle board.

According to an embodiment, "wood" does not encompass living trees or other plants.

According to an embodiment, the method of the invention is carried out on a piece of wood such as a piece or an object made of wood.

According to an embodiment, the method of the invention consists in treating a piece of wood such as a wood panel.

According to an embodiment, the method of the invention consists in spraying the hydrocarbon fluid as defined above on a piece of wood, in particular on at least one surface of said piece.

The hydrocarbon fluid in the method according to the invention is applied at a controlled temperature.

According to an embodiment, the hydrocarbon fluid according to the invention is applied at room temperature, typically from 15°C to 30°C, preferably from 17°C to 27°C.

Preferably, in this embodiment, the wood is contacted with the fluid for a period ranging from 5s to 30s, preferably for 20s, more preferably for two periods of 10s.

According to an embodiment, the hydrocarbon fluid according to the invention is heated to a temperature above its boiling range, preferably the hydrocarbon fluid according to the invention is heated to a range of temperatures ranging from 140°C to 200°C, more preferably from 140°C to 160°C, in particular for 15 minutes conditioning, to ensure optimal absorption and effectiveness.

Preferably, in this embodiment, the wood is contacted with the fluid for a period ranging from 5 minutes to 25 minutes, preferably for 15 minutes. This helps to avoid prolonged exposure to boiling temperatures, which can sometimes lead to warping or damage to more delicate wood species.

Preferably, the method according to the invention further includes a drying step, which is carried out after the step of contacting the wood with a hydrocarbon fluid.

Another object of the present invention is a method for protecting the wood, in particular against xylophagous species, said method comprising a step of contacting the wood with a bio-sourced fluid as defined above.

### Figures

Figure 1 is a picture of wood samples treated by the boiling method with the fluid according to the invention. The wood samples treated with the composition according to the invention did not show any color change after 4 weeks.
Figure 2 is a picture of wood samples treated by the boiling method with linseed oil. The wood samples treated with the linseed oil turned dark brown after 4 weeks.

### Examples

The invention is now described trough out the following examples, which are not intended to limit the scope of the present invention, but are incorporated to illustrate advantages of the present invention and the best modes to perform it.

### Example 1 - Physical and chemical properties of the wood preservative fluids

Composition C1, described in Table 1 below, is a bio-sourced fluid according to the invention, whereas the comparative composition CC1, also described in Table 1, is a plant-based fluid (linseed oil) with a water content higher than according to the invention. Both fluids were used in the present examples.

The characteristics of the bio-sourced fluid used in composition C1 are listed below in Table 2:

**Table 1 - Wood preservatives**

| **Properties** | **Method** | **Unit** | **C1** | **CC1** |
|---|---|---|---|---|
| Density at 15°C | ASTM D4052 | kg/m³ | 780.75 | 979.3 |
| Aniline Point | ASTM D611 | °C | 95.9 | 31.8 |
| Pour point | ASTM D97 | °C | -69 | -3 |
| Flash Point (PMCC) | ASTM D93 | °C | 126 | 216 |
| Kinematic Viscosity at 40°C | ASTM D445 | mm²/s | 3.0344 | 1019 |
| Kinematic Viscosity at 100°C | ASTM D445 | mm²/s | 1,2209 | 98.12 |
| Sulfur content | ASTM D5453 | mg/kg | 0.1 | <17 |
| IBP | ASTM D86 | °C | 264.4 | *NA* |
| FBP | ASTM D86 | °C | 287 | *NA* |
| Water Content | ASTM D 6304 | mg/kg | 105 | 150 |
| Aromatic content (Alkyl Benzene) | UOP 945 | ppm | 16.6 | - |
| Aromatic content (Naphtalene)) | UOP 945 | ppm | 1.25 | - |

| | | | | |
|---|---|---|---|---|
| *NA: Not applicable as the fluid starts to foam which prevents from performing the test.* | | | | |

**Table 2 - Characteristics of the biosourced fluid according to the invention**

| Characteristic | Content |
|---|---|
| Aromatic content (ppm) | <20 |
| Sulfur content (ppm) | 0.1 |
| % isoparaffins (w/w) | 95.1 |
| % n-paraffins (w/w) | 4.9 |
| % naphthenic (w/w) | 0 |
| % C15 (iso) | 11.45 |
| % C16 (iso) | 47.89 |
| % C17 (iso) | 18.57 |
| % C18 (iso) | 17.07 |
| % C quat sat | 0 |
| % CH sat | 10.9 |
| % CH₂ sat | 67.8 |
| % CH₃ sat | 21.2 |
| % CH₃ long chain | 13.3 |
| % CH₃ short chain | 8 |
| Biocarbon content (%) | 97 |

### Example 2 - Wood preservation against termites

Dimensions of the wood samples were 50 mm x 50 mm x 10 mm.

### Example 2-1: Boiling method

The wood samples were boiled into the preservative fluid for 15 min in a treatment vessel. After treatment, the wood samples were dried for 2 weeks.

### Example 2-2: Dipping method

The wood samples were immerged completely in a treatment vessel containing the preservative fluid for 20s. After treatment, the wood samples were dried for 2 weeks.

### Example 2-3: Termites attack

After completion of the preservation treatment, the wood samples were taken for exposure. A glass tube with both ends opened was inserted in a disc made on each wood sample with silicon. A mixture of red moist soil, sand and fragment of culture wood was poured inside the tubes. The mixture, which was not pressed down into the tube, occupied at least two-thirds of the volume of the tube (height of about 7 cm). A total of 10 *Reticulitermes* species of European termites were released inside the upper end of the tubes. The tubes were then covered with a piece of aluminum foil to prevent evaporation of water and escape from termites. The wood samples were also set on individual trays to prevent any escape from termites and kept in an environmental chamber for 4 weeks.

Untreated wood samples were also submitted to a termite attack under the same protocol.

### Example 2-4: Results

The preservation performance of compositions C1 and CC1 were evaluated by counting the number of dead *Reticulitermes* species of European termites after 4 weeks.

Results are shown in table 3 for the boiling method.

**Table 3 - Wood preservation against termites including a boiling process**

| **Preservative fluid** | **C1** | **CC1** | **None** |
|---|---|---|---|
| *Average results over three replicates (%)* | | | |
| Termite infestation range (% of Infestation Visually) | 0.00 | 26.67 | 56.67 |
| **Total of dead termites** | **100.00** | **33.33** | **10.00** |
| **Wood color** | **Stable** | **Unstable** | **Stable** |

Following the preservation treatment with the boiling method, the inventive composition C1 recorded no infestation with a 100.00% mortality rate whereas the comparative composition CC1 exhibited an infestation range of 26.67% with mortality rate of 33.33%. The untreated control exhibited an infestation range of 56.67% with a 10.00% mortality rate.

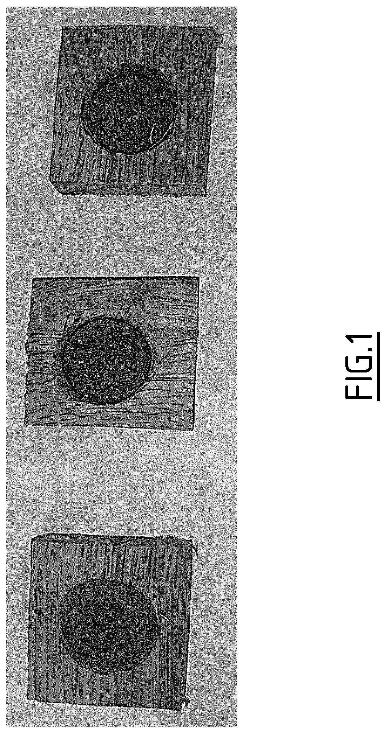

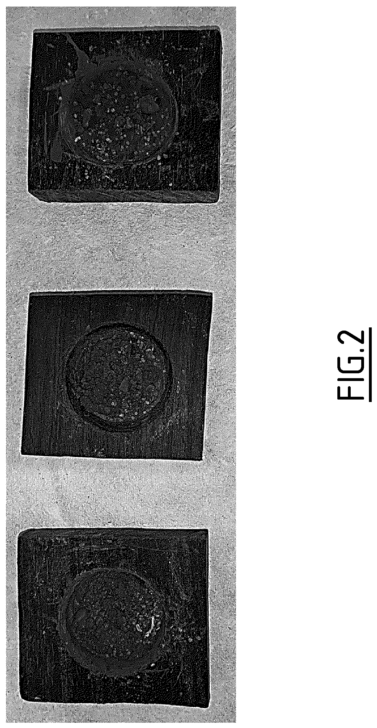

Moreover, after 4 weeks, the wood samples treated with C1 (Fig 1) did not show any color change whereas the ones treated with CC1 (Fig 2) turned dark brown. This can be explained by the lower water content of C1, making it more stable against wood samples over time.

Results are shown in Table 4 for the dipping method.

**Table 4 - Wood preservation against termites including a dipping process**

| **Preservative fluid** | **C1** | **CC1** | **None** |
|---|---|---|---|
| *Average results over three replicates (%)* | | | |
| Termite infestation range (% of Infestation Visually) | 0.00 | 31.67 | 58.33 |
| **Total of dead termites** | **100.00** | **23.33** | **6.67** |

Following the preservation treatment with the dipping method, the composition C1 according to the invention recorded no infestation with a 100.00% mortality rate whereas the comparative composition CC1 exhibited an infestation range of 31.67% with mortality rate of 23.33%. The untreated control exhibited an infestation range of 58.33% with a 6.67% mortality rate.

C1 was found to be effective as a wood preservative oil against the *Reticulitermes* species of European termites by boiling in hot oil method and dipping method under laboratory condition.

Moreover, C1 was found to be more stable against wood sample over time.

### Example 3 - Wood preservation against beetles

Dimensions of the wood samples were 50 mm x 25 mm x 15 mm. The transverse faces were sealed with paraffin wax by applying three coats at 90°C.

### Example 3-1: Boiling method

The wood samples were boiled into the preservative fluid for 15 min in a treatment vessel. Each sample was removed from the fluid using a forceps. The fluid was squeezed from all sealed faces. After treatment, the wood samples were set on their lateral narrow faces, resting on glass rod without touching one another, and were well-ventilated in air-conditioned room (20 - 24°C, 65 - 75% humidity) for four weeks.

### Example 3-2: Dipping method

The wood samples were immerged completely in a treatment vessel containing the preservative fluid for two periods of 10 seconds separated by an internal of 24 hrs. Each sample was removed from the fluid using a forceps. The fluid was sponged from all sealed faces. After treatment, the wood samples were set on their lateral narrow faces, resting on glass rod without touching one another, and were well-ventilated in air-conditioned room (20 - 24°C, 65 - 75% humidity) for four weeks.

### Exemple 3-3: Beetles attack

After completion of the preservation treatment, the wood samples were placed in individual plastic jars. A total of 10 larvae of *Hylotrupes bajulus* beetles were then released inside each jar before monitoring the xylophagous species behaviour for 4 weeks. For ventilation purposes, every jars were covered with a black cotton cloth.

Untreated wood samples were also submitted to a beetles attack under the same protocol.

### Example 3-4: Results

The preservation performance of compositions C1 and CC1 were evaluated by counting the number of dead larvae of *Hylotrupes bajulus* beetles after 4 weeks.

Results are shown in table 5 for the boiling method.

**Table 5 - Wood preservation against beetles including a boiling process**

| **Preservative fluid** | **C1** | **CC1** | **None** |
|---|---|---|---|
| *Average results over three replicates (%)* | | | |
| Mortality rate of larvae having tunnelled | 63.33 | 26.67 | 6.67 |
| Mortality rate of larvae having not tunnelled | 36.67 | 16.67 | 0.00 |
| **Total of dead larvae** | **100.00** | **43.33** | **6.67** |

Following the preservation treatment with the boiling method, the composition C1 (invention) exhibited an average 63.33% mortality rate of larvae having tunneled, an average 36.67% mortality rate of larvae having not tunneled and a total mortality rate of 100.00%. On the other hand, the comparative composition CC1 exhibited an average 26.67% mortality rate of larvae having tunneled, an average 16.67% mortality rate of larvae having not tunneled and a total mortality rate of 43.33%. The untreated wood sample exhibited a total mortality rate of 6.67%.

Results are shown in table 6 for the dipping method.

**Table 6 - Wood preservation against beetles including a dipping process**

| **Preservative fluid** | **C1** | **CC1** | **None** |
|---|---|---|---|
| *Average results over three replicates (%)* | | | |
| Mortality rate of larvae having tunnelled | 70.00 | 20.00 | 3.33 |
| Mortality rate of larvae having not tunnelled | 26.67 | 16.67 | 3.33 |
| **Total of dead larvae** | **96.67** | **36.67** | **6.67** |

Following the preservation treatment with the dipping method, the composition C1 (invention) exhibited an average 70% mortality rate of larvae having tunneled, an average 26.67% mortality rate of larvae having not tunneled and a total mortality rate of 96.67%. On the other hand, the comparative composition CC1 exhibited an average 20.00% mortality rate of larvae having tunneled, an average 16.67% mortality rate of larvae having not tunneled and a total mortality rate of 36.67%. The untreated wood sample exhibited an average 3.33% mortality rate of larvae having tunneled, an average 3.33% mortality rate of larvae having not tunneled and a total mortality rate of 6.67%.

C1 was found to be effective as a wood preservative oil against the larvae of *Hylotrupes bajulus* beetles by boiling in hot oil method and dipping method under laboratory condition.

## Claims

1. Use of a bio-sourced fluid as a wood preservative, particularly for the protection of wood against xylophagous species such as wood-boring insects and lignovorous fungi, said fluid having a kinematic viscosity at 40°C from 3 to 6 mm²/s, a flash point of higher than 120°C and a pour point lower than -40°C, having a boiling point in the range of 200°C to 400°C and a boiling range below 80°C, said fluid comprising more than 95% isoparaffins and less than 3% of naphtens by weight, a biocarbon content of at least 95% by weight, containing less than 100 ppm aromatics by weight.

2. The use according to claim 1, as a wood preservative against xylophagous species.

3. The use according to claim 1 or 2, wherein the bio-sourced fluid has a pour point lower than -50°C.

4. The use according to any one of claims 1 to 3, wherein the bio-sourced fluid has an initial boiling point of at least 260°C and a final boiling point of about less than about 320°C, preferably less than about 310°C.

5. The use according to any one of claims 1 to 4, wherein the bio-sourced fluid contains less than 50 ppm aromatics by weight, and preferably less than 20 ppm by weight.

6. The use according to any one of claims 1 to 5, wherein the bio-sourced fluid contains less than 5 ppm, advantageously less than 3 ppm and preferably less than 0.5 ppm of sulfur.

7. The use according to any one of claims 1 to 6, wherein the bio-sourced fluid contains less than 1% by weight of naphtens, preferably less than 500 ppm and more preferably less than 50 ppm.

8. The use according to any one of the previous claims, wherein the bio-sourced fluid contains less than 120 ppm by weight of water, preferably less than 115 ppm, and more preferably less than 110 ppm.

9. The use according to any one of the previous claims, wherein the bio-sourced fluid has a biodegradability at 28 days of at least 60%, preferably at least 70%, more preferably at least 75% and advantageously at least 80%, as measured according to the OECD 306 standard.

10. The use according to any one of the previous claims, wherein the xylophagous species are selected from the group consisting of termites, beetles, and fungi.

11. A method for treating wood, said method comprising a step of contacting wood with a bio-sourced fluid as defined in any one of claims 1 to 9.

12. The method according to claim 11, wherein the step of contacting is a step of immersing wood in the bio-sourced fluid.

13. The method according to claim 11 or 12, wherein the bio-sourced fluid is heated to a temperature ranging from 140 °C to 200°C, preferably from 140°C to 160°C.
